# EUROPEAN PATENT APPLICATION

(11) **EP 3 637 602 A1**
(43) Date of publication of application: **15.04.2020**
(21) Application number: 18814023.0
(22) Date of filing: 01.06.2018
(51) Int. Cl.: H02M 1/16

(54) **METHOD FOR REDUCING SWITCHING OVERVOLTAGES**

(30) Priority: 07.06.2017 RU 2017120003
(71) Applicant: Open Joint Stock Company "Russian Railways", Moscow 170174 (RU)
(72) Inventor: MELNICHENKO, Oleg Valeryevich, g. Irkutsk Irkutskaya obl. 664039 (RU); PORTNOY, Aleksandr Yuryevich, g. Irkutsk Irkutskaya obl. 664003 (RU); SHRAMKO, Sergey Gennadyevich, g. Irkutsk Irkutskaya obl. 664040 (RU); LINKOV, Aleksey Olegovich, g. Irkutsk Irkutskaya obl. 664039 (RU); YAGOVKIN, Dmitriy Andreevich, g. Irkutsk Irkutskaya obl. 664039 (RU)
(74) Representative: Martegani, Franco
(86) International application number: PCT/RU2018/000357
(87) International publication number: WO 2018/226121

(57) **Abstract**

The invention relates to electrical engineering, in particular to circuits for protecting switching devices from overvoltages, and to the accumulation and beneficial use of this energy to power another item of electrical equipment. The invention can be used, for example, in converter technology. A method for protecting and beneficially using the energy of switching overvoltages arising when a circuit between a transformer and an active inductive load is tripped during an operation of an item of electrical equipment consists in that the switching overvoltage energy is stored and converted by a pulse transformer power supply source which is connected to the circuits being and consists of a diode rectifier or bridge, a capacitor which is connected to an output of the diode rectifier or bridge, a pulse transformer connected to the capacitor, an electronic switch, an electronic switch control circuit, and an output rectifier which is connected to the transformer, and is intended for supplying another item of other electrical equipment with electrical energy. The pulse power-supply source control circuit allows regulation of the discharge duration of the capacitor depending on the duration of the switching overvoltages.

## Description

### Field of the Invention

The invention relates to electrical engineering, in particular to circuits for protecting switching devices from overvaltages, accumulation and beneficial use of this energy to power another item of electrical equipment, and may be used in the field of converter equipment.

### Prior Art

1. Methods and devices for implementing thereof are known that provide protection of thyristor electrical equipment from switching overvoltages and are based on absorption of overvoltage energy by damping capacitors and resistors, zinc-oxide nonlinear limiters, surge absorbers, diode limiters (Bickford J.P. et al. Computation of power system transients (in Russian): Translated from English by Bazutkin V.V.; Ed. by Obukh A.A. - M; Energoizdat Publ. House, 1981, p. 147-158; Glukh E.M., Zelenov V.E.. Protection of Semiconductor Converters. - 2nd Edition, as revised and supplemented. - M: Energoizdat Publ. House, 1982. - 152 p.; E. Habiger. Electromagnetische Vertraglichkeit. Grundzuge ihrer Sicherstellung in der Gerate- und Anlagentechnik (in Russian): Translated from German by Kuzhekin I.P.; Ed. by Maximov B.K. - M: Energoatomizdat Publ. House. 1995, p. 127-137, 178-184; SU 851615, 30.07.1981).

A disadvantage of these methods and devices for implementing the same is impossibility of efficient reduction of switching overvoltages by means thereof , as well as the fact that the switching overvoltage energy is damped in a snubber (damping) circuit as losses.

A method for protecting an IGBT-based module in an excitation rectifier of an electric locomotive from switching overvoltage is known (RU 2565633C1, 20.10.2015). This method enables to protect an IGBT-based module from switching overvoltages by removing a major portion of leakage inductance energy from its collector via additional controllable electronic switches and feeding it to additional secondary windings of a locomotive traction transformer with a common core, by turning on these additional electronic switches alternately, depending on a half-cycle of the power system voltage, at a time not later than a protected IGBT-based module is switched off, and such switching off occurs in a time period depending on the duration of switching overvoltages. A disadvantage of this method is that switching overvoltage energy is outputted into the power system, which may cause additional voltage distortions and make the traction transformer much more complicated.

Switch mode power supplies with inverse converters are known, e.g. as described in SU 1707606A1, 23.01.1992 (prototype). This invention provides improved stabilization and reliability of the power supply due to stabilization of the power transistor base current. Such inventions were not configured and were not used for the protection from switching overvoltages.

### Summary of the Invention

A method for reducing switching overvoltages and using theirenergy to power another item of electrical equipment, when these switching overvoltages arise during disconnecting inductance containing loads, characterized in that energy of the switching overvoltages is accumulated and converted by a pulse transformer power supply source connected to the protected circuits, that comprises a diode rectifier or bridge, a capacitor connected to an output of the diode rectifier or bridge, a pulse transformer connected to the capacitor, an electronic switch, an electronic switch control circuit, an output rectifier connected to the transformer and configured for supplying electric energy to another item of electrical equipment.

### Description of the Drawings

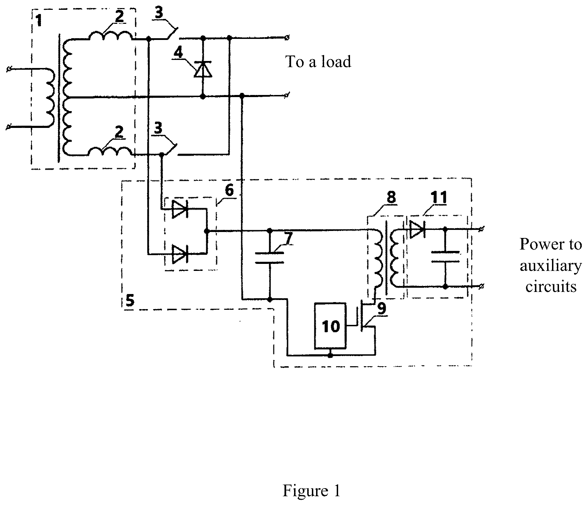

Figure 1 shows a schematic diagram of the device for accumulating and converting energy of the switching overvoltages.

### Best Mode for Carrying Out the Invention

The inventive device is a pulse transformer power supply source 5 connected to output terminals of the secondary winding of a voltage transformer 1 (having leakage inductances 2) before switching members 3, the device comprising a diode rectifier or bridge 6, a capacitor 7 connected to an output of the diode rectifier or bridge, a pulse transformer 8, an electronic switch 9, an electronic switch control circuit 10, an output rectifier 11. A diode 4 provides continuity of a load current flow when the switches 3 are opened.

The technical effect is the protection of the switch members from switching overvoltages as well as accumulation and conversion of this energy to power another item of electrical equipment.

## Claims

1. A method for reducing switching overvoltages and using their energy to power another item of electrical equipment, which arise when disconnecting an inductance containing load **characterized in that** the switching overvoltage energy is accumulated and converted by a pulse transformer power supply source comprising a diode rectifier or a bridge, a capacitor connected to an output of the diode rectifier or the bridge, a pulse transformer connected to the capacitor, an electronic switch, an electronic switch control circuit, an output rectifier connected to the transformer and intended for supplying another item of electrical equipment with electrical energy.
